## Europäisches Patentamt

## European Patent Office

## Office européen des brevets

(19)

(11) Veröffentlichungsnummer: **0 196 644**
**B1**

(12) **EUROPÄISCHE PATENTSCHRIFT**

(45) Veröffentlichungstag der Patentschrift:
**17.11.88**

(21) Anmeldenummer: **86104342.0**

(22) Anmeldetag: **29.03.86**

(51) Int. Cl.⁴: **B 01 D 17/025,** B 01 D 1/00,
C 23 G 1/36

(54) **Verfahren und Vorrichtung zum Wiederaufbereiten von wässrigen, öl- und fetthaltigen Reinigungslösungen.**

(30) Priorität: **03.04.85 DE 3512207**

(43) Veröffentlichungstag der Anmeldung:
**08.10.86 Patentblatt 86/41**

(45) Bekanntmachung des Hinweises auf die Patenterteilung:
**17.11.88 Patentblatt 88/46**

(84) Benannte Vertragsstaaten:
**AT BE CH FR GB IT LI NL SE**

(56) Entgegenhaltungen:
**BE - A - 652 908**
**US - A - 4 477 356**

**CHEMICAL ENGINEERING, Band 82, Nr. 21, 6. Oktober 1975, Seiten 49-61, McGraw-Hill, New York, US; L.D. LASH et al.: "Primary-waste-treatment methods"**
**METALLOBERFLÄCHE, Band 33, Nr. 3, 1979, Seiten 99-101, Carl Hauser Verlag, München, DE; K. GÄFGEN: "Kreislaufführung bei Entfettungsverfahren"**

(73) Patentinhaber: **Dürr GmbH, Spitalwaldstrasse 18, D-7000 Stuttgart 40 (DE)**

(72) Erfinder: **Koblenzer, Heinz, Odenwaldstrasse 11, D-7024 Filderstadt 4 (DE)**
Erfinder: **Hösel, Peter, Eulenweg 8, D-7530 Pforzheim (DE)**

(74) Vertreter: **Hoeger, Stellrecht & Partner, Uhlandstrasse 14c, D-7000 Stuttgart 1 (DE)**

## Beschreibung

Die Erfindung betrifft ein Verfahren zum Wiederaufbereiten von wässrigen, öl- und fetthaltigen Reinigungslösungen unter Abscheidung von Öl und Fett aus der Lösung in einem Ölabscheider. Ferner betrifft die Erfindung Vorrichtungen zur Durchführung eines solchen Verfahrens.

Es ist bekannt, zum Wiederaufbereiten von wässrigen, öl- und fetthaltigen Reinigungslösungen Ölabscheider, Zentrifugen, Ultrafiltrationsanlagen und ähnliche Systeme einzusetzen. Alle diese Einrichtungen haben den Nachteil, dass sie entweder sehr aufwendig sind, dass noch in erheblichem Masse Abwasser anfällt oder dass sie eines hohen Energieeinsatzes bedürfen. Ölabscheider müssen zur Erwärmung der behandelten Reinigungsflüssigkeit beheizt werden, was einen zusätzlichen Energiebedarf bedeutet.

Es ist Aufgabe der Erfindung, den geschilderten Mängeln abzuhelfen und ein gattungsgemässes Verfahren und eine gattungsgemässe Vorrichtung so auszugestalten, dass unter beträchtlicher Energieeinsparung eine kontinuierliche Aufbereitung und ein abwasserfreier Betrieb möglich ist.

Die Aufgabe wird bei dem gattungsgemässen Verfahren erfindungsgemäss dadurch gelöst, dass ein im Ölabscheider abgeschiedenes Gemisch aus Öl, Fett und Reinigungslösung zum Zwecke des Eindickens einer Verdampfung unterworfen wird, dass der dabei entstehende heisse Wasserdampf zur Beheizung des Ölabscheiders verwendet wird und dass das dabei aus dem Dampf entstehende Kondensatwasser in die Reinigungslösung zu deren Regenerierung zurückgeführt wird.

Hierbei wird also in vorteilhafter Weise der beim Eindicken der öl- und fetthaltigen Schmutzphase ohnehin entstehende Wasserdampf direkt zur Beheizung des Ölabscheiders und damit zur Erwärmung der Reinigungslösung auf Betriebstemperatur verwendet. Ultraschall- und andere Apparaturen sowie zusätzliche Energie zum Aufheizen des Ölabscheiders und der Reinigungslösung sind nicht erforderlich. Durch die Rückführung des bei der Verdampfung entstehenden Kondensats in die Reinigungslösung ist ein praktisch abwasserfreier Betrieb gewährleistet. Das erfindungsgemässe Verfahren arbeitet also umweltfreundlich und energiesparend.

Eine Vorrichtung zur Durchführung des erfindungsgemässen Verfahrens zeichnet sich dadurch aus, dass der Ölabscheider von einem äusseren Mantel umschlossen ist, der in seinem Bodenbereich mit einer Heizungseinrichtung zum Verdampfen der aufgesammelten öl- und fetthaltigen Reinigungslösung versehen ist, wobei der entstehende Dampf in direkten Wärmetauschkontakt mit einer Wand des Ölabscheiders gelangen kann, und dass zwischen dem Bodenbereich des äusseren Mantels und einer Bodenplatte des Ölabscheiders ein Kondensatauffangbehälter angeordnet ist, aus dem das Kondensatwasser in die Reinigungslösung zurückfliessen kann.

Die nachstehende Beschreibung bevorzugter Ausführungsformen der Erfindung dient im Zusammenhang mit beiliegender Zeichnung, auf welcher ein mit einer Reinigungsanlage zusammenwirkender Ölabscheider schematisch dargestellt ist, der weiteren Erläuterung.

Ein Ölabscheider 1 umfasst ein inneres Gefäss 2 mit einer untengelegenen Bodenplatte 3, einem z.B. zylindrischen Mantel 4 und einer oberen konischen Abschlusswand 5. Die von Öl und Fett zu befreiende Reinigungslösung wird über eine Leitung 6 etwa in der Mitte der Höhenerstreckung des Mantels 4 in das innere Gefäss eingeleitet. Im Inneren des Gefässes 2 ist in herkömmlicher Weise ein flüssigkeitsdurchlässiger Siebboden 7 angeordnet, der ein Hochsteigen grober Schmutzteilchen verhindert. Eine im Abstand unter dem Siebboden 7 angeordnete, konusförmig verlaufende, rinnenartige Ringwand 8 verhindert ein Verwirbeln der unterhalb dieser Wand 8 auf der Bodenplatte 3 sich absetzenden Schmutzphase in den oberhalb der Ringwand 8 gelegenen Raum hinein. Ein zentral im Gefäss 2 angeordnetes, vertikal verlaufendes Siebrohr 9 umgrenzt eine nachgeschaltete Beruhigungszone, in welche die aufzubereitende Reinigungslösung aus dem Raum zwischen Siebboden 7 und Wand 8 eintritt. Innerhalb des Siebrohrs 9 und parallel zu diesem verlaufend ist eine Leitung 11 mit trichterförmiger Eintrittsöffnung 12 angeordnet, die aus dem Ölabscheider 1 heraus ins Freie bis zu einem Magnetventil 13 geführt ist. Ausgehend von der Mitte der leicht konisch ausgebildeten Bodenplatte 3 führt eine weitere Leitung 14 aus dem Ölabscheider 1 heraus bis zu einem handbetätigten Ventil 15.

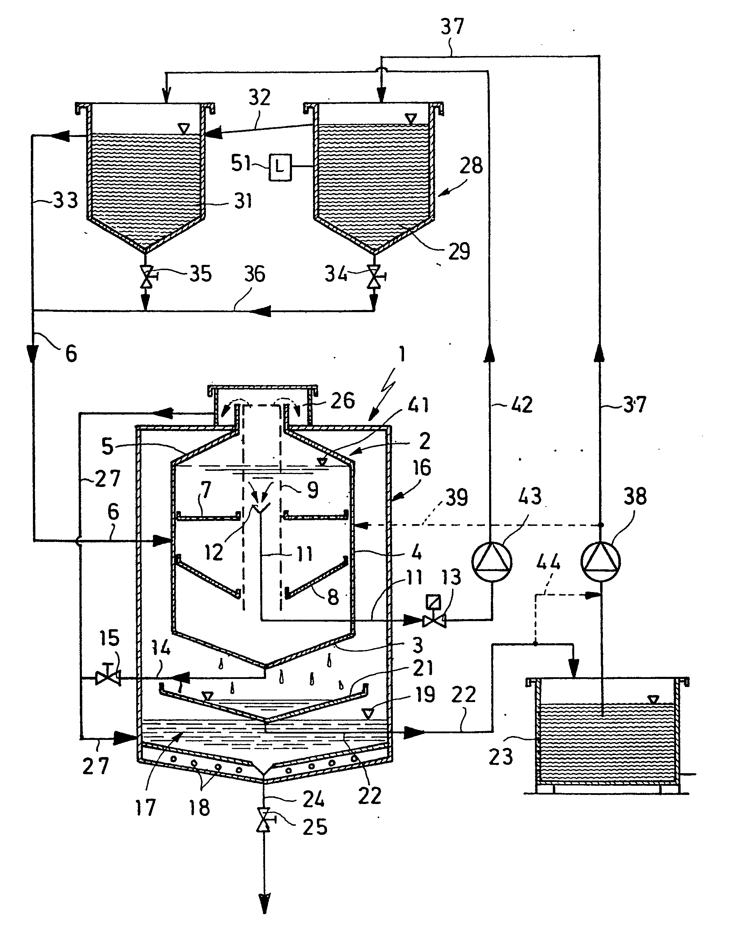

Das innere Gefäss 2 ist, wie auf der Zeichnung dargestellt, von einem äusseren Mantel 16 rings umschlossen, der von den bereits erwähnten Leitungen 6, 11 und 14 durchdrungen wird. Der Mantel 16 verläuft im Abstand von der Aussenseite des inneren Gefässes 2, so dass sich zwischen Mantel 16 und dieser Aussenseite ein Zwischenraum ergibt. In einem Bodenbereich 17 des äusseren Mantels sammelt sich (in noch zu beschreibender Weise) ein Gemisch aus Öl, Fett, Schmutz und Reinigungslösung an, welches zum Zwecke seiner Eindickung durch eine Heizungseinrichtung 18 beliebiger Art auf die Verdampfungstemperatur des in der Reinigungsflüssigkeit enthaltenen Wassers aufgeheizt werden kann. Die Lage des Spiegels des erwähnten Gemisches im Bodenbereich 17 ist auf der Zeichnung durch ein kleines Dreieck 19 angedeutet. Oberhalb des durch dieses Dreieck 19 angedeuteten Flüssigkeitsniveaus ist ein Kondensatauffangbehälter 21 im Inneren des Mantels 16 und unterhalb des inneren Gefässes 2 angeordnet. Aus dem Kondensatauffangbehälter 21 führt eine Leitung 22 ins Freie und zu einem Kondensat-Sammelbehälter 23.

Zur Entsorgung des Ölabscheiders ist die Bodenwand des äusseren Mantels 16 an eine Leitung 24 mit Ventil 25 angeschlossen. Über diese Leitung 24 kann das eingedickte Gemisch aus Schmutz, Öl, Fett und Reinigungsflüssigkeit herausgenommen werden.

Die Abschlusswand 5 des inneren Gefässes 2 leitet in ein Überlaufgefäss 26 über, von dem aus eine Überlaufleitung 27 in den Bodenbereich 17 des Ölabscheiders führt. Die weiter oben erwähnte, von der Bodenplatte 3 des inneren Gefässes 2 abführende Leitung 14 ist über das Ventil 15 mit der Ölüberlaufleitung 27 verbunden, so dass die sich auf der Bodenplatte 3 absetzende Schmutzphase bei Bedarf ebenfalls in den Bodenbereich 17 des äusseren Mantels 16 überführt werden kann.

Der soweit beschriebene Ölabscheider 1 wird in folgender Weise betrieben: Die über die Leitung 6 eingebrachte, verschmutzte, öl- und fetthaltige Reinigungslösung bildet im mittleren Bereich des inneren Gefässes 2 zwischen Siebboden 7 und Ringwand 8 eine Wasserphase, aus welcher unter Schwerkraftwirkung grobe Schmutzteilchen nach unten sinken, die sich als Schmutzphase auf der Bodenplatte 3 absetzen. Spezifisch leichtere Bestandteile, also insbesondere Öl und Fett, schwimmen aus der Wasserphase nach oben und bilden dort eine im wesentlichen aus Öl und Fett bestehende «Ölphase», die bei kontinuierlichem Betrieb kontinuierlich in das Überlaufgefäss 26 übertritt und von dort über die Leitung 27 in den Bodenbereich 17 des äusseren Mantels 16 gelangt. Zwischen Ölphase und Wasserphase entsteht oberhalb des Siebbodens 7 eine Zone aus verhältnismässig sauberer Reinigungslösung, «Reinphase» genannt. Die in den Bodenbereich 17 gelangten Öl- und Schmutzphasen werden dort verdampft. Der entstehende Wasserdampf gelangt am Kondensatauffangbehälter 21 vorbei in den Zwischenraum zwischen dem inneren Gefäss 2 und dem äusseren Mantel 16. Der heisse Wasserdampf tritt dabei in direkten Wärmetauschkontakt mit der Aussenwand des die eigentliche Öl- und Fettabscheidung bewirkenden, inneren Gefässes 2 und dient damit zur Erwärmung der im Inneren des Gefässes 2 befindlichen Phasen und damit insbesondere auch der Erwärmung der anschliessend über die Leitung 11 aus der Reinphase heraus und einer Wiederverwendung zugeführten Reinigungslösung. Das sich aus dem Dampf bildende Kondensatwasser tropft in den Kondensatauffangbehälter 21 ab und wird über die Leitung 22 in den Kondensat-Sammelbehälter 23 überführt.

Bei der auf der Zeichnung dargestellten Ausführungsform stammt die aufzubereitende Reinigungslösung aus einer vorzugsweise kontinuierlich arbeitenden Reinigungsanlage 28, die auf der Zeichnung oberhalb des Ölabscheiders 1 dargestellt ist und beispielsweise eine Spüleinrichtung 29 sowie eine Wascheinrichtung 31 umfasst. In diesen Einrichtungen werden in herkömmlicher Weise durch Öl und Fett verschmutzte Gegenstände gewaschen und anschliessend gespült. Die Spüleinrichtung steht über eine Leitung 32 in ebenfalls an sich bekannter Weise mit der Wascheinrichtung 31 in Verbindung, um Reinigungslösung nach dem Spülen zum Waschen weiterzuverwenden. Aus der Wascheinrichtung 31 gelangt die nunmehr stark verschmutzte Reinigungslösung über eine Verbindungsleitung 33 in die zum Ölabscheider 1 führende Leitung 6. Über normalerweise geschlossene Handventile 34, 35 können die Spül- und Wascheinrichtungen 29 bzw. 31 bei Bedarf in eine Leitung 36 entleert werden, die ebenfalls in die Leitung 6 einmündet.

Wie dargestellt, kann über eine Leitung 37 durch eine Pumpe 38 Kondensatwasser aus dem Sammelbehälter 23 in die Spüleinrichtung 29 eingeleitet werden. Hierdurch ist es möglich, die Reinigungslösung mit frischem Wasser fortlaufend zu regenerieren.

Bei einer anderen Ausführungsform der Erfindung erfolgt die Regenerierung und Verdünnung der Reinigungslösung nicht über die Leitung 37, sondern über die gestrichelt eingezeichnete Leitung 39, die hinter der Pumpe 38 von der Leitung 37 abzweigt und direkt in die wässrige Phase zwischen Siebboden 7 und Ringplatte 8 führt.

Im Betrieb des Ölabscheiders 1 bildet sich oberhalb des Siebbodens 7 und unterhalb der in das Überlaufgefäss 26 überlaufenden Phase eine weitere flüssige Phase aus, die im wesentlichen aus Reinigungslösung mit gelösten Bestandteilen, also insbesondere Öl, Fett und Reinigungsmittel besteht. Auf dieser verhältnismässig sauberen Phase schwimmt die (spezifisch leichtere) öl- und fetthaltige Phase, die ins Überlaufgefäss 26 überläuft. Die Grenzschicht zwischen den beiden vorerwähnten Phasen ist auf der Zeichnung durch das kleine Dreieck 41 angedeutet. In dieser bereits verhältnismässig sauberen Phase aus Reinigungslösung mit lediglich noch gelösten Bestandteilen liegt die Eintrittsöffnung 12 der Leitung 11, die hinter dem Ventil 13 an eine in die Wascheinrichtung 31 führende Leitung 42 angeschlossen ist. Somit kann über eine in dieser Leitung vorgesehene Pumpe 43 verhältnismässig saubere Reinigungslösung, aus welcher grober Schmutz sowie Öl und Fett abgetrennt sind, direkt in die Reinigungsanlage zurückgeführt werden.

Der Kondensat-Sammelbehälter 23 ist für den Betrieb der beschriebenen Anordnung nicht unbedingt erforderlich. Er könnte durch eine auf der Zeichnung ebenfalls gestrichelt dargestellte, weitere Leitung 44 umgangen werden, die von der Leitung 22 zur Pumpe 38 führt. Auch auf diese Weise ist eine kontinuierliche Einführung von Kondensatwasser zur Verdünnung der Reinigungslösung möglich, und zwar sowohl über die Leitung 37 als auch über die Leitung 39.

Es kann im übrigen auch vorgesehen werden, den im Bodenbereich 17 gebildeten, heissen Wasserdampf nicht nur zur Erwärmung des inneren Gefässes 2 des Ölabscheiders zu verwenden, sondern auch zum Erwärmen der Spül- und Wascheinrichtungen 29, 31. Zu diesem Zweck kann beispielsweise eine Wasserdampfleitung vom äusseren Mantel 16 zu den Spül- und Wascheinrichtungen geführt werden, um dort die Reinigungslösung zu erwärmen. Bei der dargestellten Ausführungsform tritt der heisse Wasserdampf in Wärmetauschkontakt mit den Wänden des inneren Gefässes 2, um hierdurch dessen Inhalt zu erwärmen. Bei einer wiederum anderen Ausführungsform der Erfindung kann vorgesehen werden, den heissen Wasserdampf wenigstens teilweise direkt in die Reinigungslösung einzuleiten, um diese gleichzeitig zu erwärmen und zu verdünnen. Diese Einleitung kann beispielsweise in die wässrige Phase im inneren Gefäss 2 des Ölabscheiders 1 erfolgen oder auch in die Spül- und Wascheinrichtungen 29 bzw. 31. Erfolgt diese Dampfeinleitung weitgehend quantitativ, so kann gegebenenfalls auf den Kondensatauffangbehälter 21 und eine Rückführung von Kondensatwasser in die Reinigungslösung verzichtet werden.

Die sich nach oben kegelartig verjüngende Form (Abschlusswand 5) des Schwerkraft-Ölabscheiders 1 erleichtert ein Abtrennen der Ölphase ohne Vermischung mit der Wasserphase. Die konische Ausbildung der Ringwand 8 trägt dazu bei, ein Aufwirbeln spezifisch schwereren Schmutzes durch die in den Abscheider 1 einströmende Reinigungslösung zu vermeiden. Unterstützt wird die Vermeidung des Aufwirbelns auch noch durch die konische Ausbildung der Bodenplatte 3.

An der Spüleinrichtung 29 ist ein Gerät 51 zur Messung der elektrischen Leitfähigkeit der in dieser Einrichtung befindlichen Reinigungslösung angeordnet. Anhand der gemessenen Werte kann die über die Leitung 32 strömende Rückflussmenge mittels eines (nicht dargestellten) Ventils automatisch gesteuert werden.

**Patentansprüche**

1. Verfahren zum Wiederaufbereiten von wässrigen, öl- und fetthaltigen Reinigungslösungen bei der Reinigung industrieller Teile unter Abscheidung von Öl und Fett aus der Lösung in einem Schwerkraft-Ölabscheider mit übereinanderliegenden Schmutz-, Wasser- und Ölphasen, dadurch gekennzeichnet, dass im Ölabscheider abgeschiedenes Gemisch aus Öl, Fett und Reinigungslösung zum Zwecke des Eindickens einer Verdampfung unterworfen wird, dass der dabei entstehende, heisse Wasserdampf zur Beheizung des Ölabscheiders verwendet wird und dass das dabei aus dem Dampf entstehende Kondensatwasser in die Reinigungslösung zu deren Regenerierung zurückgeführt wird.

2. Verfahren nach Anspruch 1, dadurch gekennzeichnet, dass das Kondensatwasser in die im Ölabscheider befindliche Reinigungslösung zurückgeführt wird.

3. Vorrichtung zur Durchführung des Verfahrens nach Anspruch 1 oder 2, dadurch gekennzeichnet, dass ein inneres Gefäss (2) des Ölabscheiders (1) von einem äusseren Mantel (16) umschlossen ist, der in seinem Bodenbereich (17) mit einer Heizungseinrichtung (18) zum Verdampfen der aufgesammelten öl- und fetthaltigen Reinigungslösung versehen ist, wobei der entstehende, heisse Dampf in direkten Wärmetauschkontakt mit den Wänden des inneren Gefässes (2) gelangen kann, und dass zwischen dem Bodenbereich (17) des äusseren Mantels (16) und einer Bodenplatte (3) des inneren Gefässes (2) ein Kondensatauffangbehälter (21) angeordnet ist, aus dem das Kondensatwasser in die Reinigungslösung zurückfliessen kann.

4. Vorrichtung nach Anspruch 3, dadurch gekennzeichnet, dass ein Kondensat-Sammelbehälter (23) vorgesehen ist, in dem das Kondensatwasser vor seinem Rückfluss in die Reinigungslösung aufgesammelt wird.

5. Vorrichtung nach Anspruch 3, dadurch gekennzeichnet, dass sich die obere Abschlusswand (5) des inneren Gefässes (2) nach oben hin konisch verjüngt.

6. Vorrichtung nach Anspruch 3, dadurch gekennzeichnet, dass eine im inneren Gefäss (2) vorgesehene, eine Schmutzverwirbelung verhindernde Ringwand (8) konusförmig verläuft.

7. Vorrichtung nach Anspruch 3, dadurch gekennzeichnet, dass die Bodenplatte (3) des inneren Gefässes (2) konisch ausgebildet ist.

8. Vorrichtung nach einem der Ansprüche 3–7, dadurch gekennzeichnet, dass ein Messgerät (51) zur Messung der Leitfähigkeit der Reinigungslösung, insbesondere im Bereich einer Spüleinrichtung (29) zwecks entsprechender Steuerung der Rückflussmenge aus dieser Einrichtung (29) in eine Wascheinrichtung (31) vorgesehen ist.

**Claims**

1. A process for the regeneration of aqueous, oil- and fat-containing cleaning solutions for cleaning industrial parts by separating the oil and fat from the solution in a gravity oil separator with superposed dirt, water and oil phases, characterized in that the mixture, separated in the oil separator, of oil, fat and cleaning solution is subjected to evaporation for the purpose of concentration, in that the hot water vapour thereby arising is used to heat the oil separator, and in that the condensed water arising from the steam is returned to the cleaning solution to regenerate it.

2. A process according to claim 1, characterized in that the condensed water is returned to the cleaning solution located in the oil separator.

3. A device for effecting the process according to claim 1 or claim 2, characterized in that an inner vessel (2) of the oil separator (1) is surrounded by an outer jacket (16), which is provided in its floor area (17) with a heating device (18) for evaporating the collected oil- and fat-containing cleaning solution, the hot steam arising being able to achieve direct heat exchange contact with the walls of the inner vessel (2) and in that between the floor area (17) of the outer jacket (16) and a base plate (3) of the inner vessel (2) there is arranged a condensate receiving container (21), from which the condensed water can flow back into the cleaning solution.

4. A device according to claim 3, characterized in that a condensate collecting container (23) is provided in which the condensed water is collected before it flows back into the cleaning solution.

5. A device according to claim 3, characterized in that the upper closing wall (5) of the inner vessel (2) tapers conically upwards.

6. A device according to claim 3, characterized in that an annular wall (8) provided in the inner vessel (2) to prevent dirt from swirling around is conical in shape.

7. A device according to claim 3, characterized in that the base plate (3) of the inner vessel (2) is constructed conically.

8. A device according to any one of claims 3 to 7, characterized in that a measuring apparatus (51) is provided to measure the conductivity of the cleaning solution, especially in the region of a cleaning device (29) for the purpose of corresponding control of the reflux quantity out of this device (29) into a washing device (31).


**Revendications**

1. Procédé de recyclage de solutions de nettoyage aqueuses contenant de l'huile et de la graisse lors du nettoyage des pièces industrielles par extraction d'huile et de graisse hors de la solution dans un séparateur d'huile par gravité avec des phases de fange, d'eau et d'huiles superposées; caractérisé en ce que le mélange d'huile, de graisse et de solution de nettoyage séparé dans le séparateur d'huile est soumis à une évaporation dans le but d'épaissir, en ce que le vapeur d'eau chaude, qui est produite alors, est utilisée pour le réchauffage du séparateur d'huile, et en ce que l'eau de condensation provenant de la vapeur est réintroduite dans la solution de nettoyage pour la régénération de celle-ci.

2. Procédé selon la revendication 1, caractérisé en ce que l'eau de condensation est réintroduite dans la solution de nettoyage se trouvant dans le séparateur d'huile.

3. Dispositif pour la mise en œuvre du procédé selon la revendication 1 ou 2, caractérisé en ce qu'un récipient intérieur (2) du séparateur d'huile (1) est entouré d'une enceinte extérieure (16) qui est munie dans sa zone de fond (17) d'une installation de chauffage (18) pour vaporiser la solution de nettoyage recueillie contenant de l'huile et de la graisse, la vapeur d'eau produite pouvant entrer en contact d'échange thermique avec les parois du récipient intérieur (2), et en ce qu'entre la zone de fond (17) de l'enceinte extérieure (16) et une plaque de fond (3) du récipient intérieur (2) est disposé un bac de réception (21) de condensat d'où l'eau de condensation peut retourner en s'écoulant dans la solution de nettoyage.

4. Dispositif selon la revendication 3, caractérisé en ce qu'un collecteur (23) de condensat est prévu, dans lequel l'eau de condensation est recueillie avant son retour dans la solution de nettoyage.

5. Dispositif selon la revendication 3, caractérisé en ce que la paroi de fermeture (5) supérieure du récipient intérieur (2) se rétrécit coniquement vers le haut.

6. Dispositif selon la revendication 3, caractérisé en ce qu'une paroi circulaire (8) empêchant le tourbillonnement de la fange est prévue dans le récipient intérieur (2) où elle s'étend en formant un cône.

7. Dispositif selon la revendication 3, caractérisé en ce que la plaque de base (3) du récipient intérieur (2) a une conformation conique.

8. Dispositif selon une des revendications 3 à 7, caractérisé en ce qu'un appareil de mesure (51) est prévu pour mesurer la conductibilité de la solution de nettoyage, en particulier au niveau d'une installation de rinçage (29) en vue du réglage correspondant de la quantité d'écoulement de retour hors de cette installation (29) dans une installation de lavage (31).